# EUROPEAN PATENT APPLICATION

(11) **EP 2 236 271 A1**
(43) Date of publication of application: **06.10.2010**
(21) Application number: 09400009.8
(22) Date of filing: 30.03.2009
(51) Int. Cl.: B29C 70/48, B29C 70/54, B29C 33/30

(54) **Method and mould tool for producing a component made of fibre-reinforced plastic**

(71) Applicant: Eurocopter Deutschland GmbH, 86609 Donauwörth (DE)
(72) Inventor: Meyer-Noack, Sven, 86609 Donauwörth (DE); Radekopf, Jörg, 86663 Asbach Bäumenheim (DE)
(74) Representative: GPI & Associés

(57) **Abstract**

The invention relates to a method for producing a component made of fibre-reinforced plastic by impregnating a fibre mould-blank (11) with a liquid impregnating material (10), comprising at least the following steps:
a) placing the fibre mould-blank (11) into a cavity (2) of a mould tool (1) while generating a temporary free space (9) between the fibre mould-blank (11) and at least one interior surface (19) of the mould tool (1);
b) feeding the impregnating material (10) into this free space (9);
c) closing the free space (9) by narrowing the mould tool (1) so that the impregnating material (10) is displaced from the free space (9) into the fibre mould-blank (11). It is further developed in that the mould tool (1) is gradually subjected to locally different forces (F1; F2; F3; ... Fn, Fa; Fb; Fc) which locally cause the free space (9) to be closed. Furthermore, the invention relates to a mould tool (1) that is designed analogously to this.

## Description

The invention relates to a method for producing a component made of fibre-reinforced plastic by impregnating a fibre mould-blank with a liquid impregnating material, comprising at least the following steps:
a) placing the fibre mould-blank into a cavity of a mould tool while generating a temporary free space between the fibre mould-blank and at least one interior surface of the mould tool;
b) feeding the impregnating material into this free space;
c) closing the free space by narrowing the mould tool so that the impregnating material is displaced from the free space into the fibre mould-blank.

Furthermore, the invention relates to a mould tool for producing components made of fibre-reinforced plastic by impregnating a fibre mould-blank with a liquid impregnating material, with a cavity into which the fibre mould-blank can be placed while forming a temporary free space between the fibre mould-blank and at least one interior surface of the mould tool, and a narrowing device for narrowing the mould tool.

In the production of fibre-reinforced plastic components by means of liquid impregnation methods (liquid composite moulding - LCM) a fibre mould-blank is made to absorb impregnating material right through, if possible to saturation point. In this process it is of central importance that the impregnating material reaches into all the regions of the blank, in particular into the regions furthest removed from its surface or from a gate duct of a mould tool, in order to in this way ensure complete impregnation.

The commonly used impregnating methods all face this problem. These methods include, for example, the two methods of resin transfer moulding (RTM), in which overpressure is generated during infeeding of the impregnating material, and the resin infusion (RI) method, in which negative pressure is generated in order to suck the fed-in impregnating material into all the cavities of the blank. Depending on auxiliary means employed or on special parameter selection, these two principal methods can be divided into a multitude of special method sub-categories. In some impregnation methods this necessitates relatively high and cost-intensive material expenditure. Above all, however, especially in the production of more complex components, there is still the danger of regions of the fibre mould-blank not being adequately soaked-through with impregnating material, so that waste arises.

The German patent application DE 101 57 655 A1 therefore proposes an impregnating method of the type mentioned in the introduction.

It is the object of the present invention to still further improve this method as far as its effectiveness and efficiency are concerned, and to provide a device that is suitable for a method that has been improved in this way.

This object is met by a method according to claim 1, and a mould tool according to claim 10.

In a method of the type mentioned in the introduction, according to the invention the mould tool is gradually subjected to locally differing forces which locally cause the free space to close.

Thus a liquid impregnating material, for example a resin (or an artificial resin) or a thermoplastic, is placed into a free space, preferably a thin gap, between the fibre mould-blank and the interior surface of the mould tool, if needed also directly into the fibre mould-blank. In this document the term "fibre mould-blanks" primarily refers to so-called preforms, i.e. raw components that comprise a number of fibre layers and if applicable also other components, for example compact elements such as metal parts or plastic mould parts. In particular, they can comprise a solid core that is compact per se, around which core a number of fibre layers have been placed. Furthermore, they do not contain any resin yet, or they do not contain an adequate quantity of resin yet; this resin will be supplied to them only in the impregnation method.

Instead of subjecting the mould tool to a constant force along its entire extension in the region of the free space, as has been the case up to now in the state of the art, according to the invention, locally different forces are applied. As a result of the targeted uneven force distribution, the free space closes gradually, starting in the regions where the greatest forces act. Starting from there, gradually, in the same regions, or in other regions, forces matching the necessities of mould-technology and flow-technology of the fibre mould-blank and of the impregnating material can be applied. The impregnating material is thus not only pressed and compressed from the free space to the fibre mould-blank but also further in the direction of the remaining region of the free space. Thus a material flow both into the fibre mould-blank and into the still existing remaining region of the free space is caused. The free space is thus reduced in space, either step by step or in a linear manner, until it is completely narrowed. The remaining impregnating material that is no longer required for penetration of the fibre mould-blank can be removed, at the end of the method, by way of an outlet in the mould tool, for example by suction. However, advantageously, in the context of the method according to the invention the quantity of this residual material is kept within narrow limits so that unnecessary waste can be avoided. The precise doseability of impregnating material is due to the fact that neither a particularly high input pressure nor a particularly strong outlet negative pressure is necessary in order to be able to implement the method according to the invention. Instead, the impregnating material can be placed into the region of the temporary free space almost at atmospheric pressure, and can thus be dosed very precisely.

The method according to the invention makes it possible, in particular, to significantly better control the impregnation process because precisely-metered local force action onto the mould tool becomes possible. In regions of the fibre mould-blank, which regions are particularly critical in respect to local penetrability of the fibre layers, the effect of force can be increased in a targeted manner in such a way that complete impregnation is possible. In particular, in those regions it is also possible to build up high pressures in a targeted manner from several sides. The end region of the fibre mould-blank, i.e. the region in which the free space is the last one that is completely closed, is a further particularly critical region. In the hitherto-known methods this region was associated with a danger in that the impregnating material escaped directly into an outlet nozzle instead of moving into the mould blank. In contrast to this, in the context of the invention, locally higher pressures are achieved for placing the impregnating material in the mould blank, if applicable in combination with temporary closure of the outlet.

With the method according to the invention, impregnating material can also in a targeted manner be placed locally into the fibre mould-blank, while certain regions are not impregnated with the others. It is thus possible to carry out selective impregnation, which with the hitherto-known methods has not been possible or has been possible only with great difficulty. In these regions the free space between the fibre mould-blank and the interior surface of the mould tool is then preferably not subjected to force, or subjected only to little force, so that, for example, only superficial impregnation takes place. Particularly preferably, at the end of the process the interior surfaces of the mould tool contact the component over the entire surface. The interior form of the mould tool and the exterior form of the finished component then correspond to each other, and the method is complete only if impregnating material has completely penetrated the fibre mould-blank. This includes, in particular, the complete closing of the free space.

According to a first alternative, a thermoplastic impregnating material is used as an impregnating material. This is a liquid matrix, for example liquefied by being melted, and cures as a thermoplastic. A thermoplastic impregnating material is associated with an advantage in that after impregnation the component can be more easily re-confectioned by thermal rework.

A second alternative provides for a duroplastic impregnating material, preferably an impregnating resin, to be used. This matrix, which is also liquid, cures as a duroplastic, so that the component in the impregnating process automatically obtains its final form which is rigid in principle. If required, its surface can additionally be subjected to aftertreatment, for example mechanically by grinding, planing, polishing and much more. However, such aftertreatment is not mandatory, because in the case of mould tools with a good surface quality of the interior mould of the mould tool the desired surface characteristics of the component can already be achieved in the impregnating process.

A particular advantage of the method according to the invention is obtained with the use of a pigment-filled impregnating resin. Generally speaking, the term "pigment filling" refers to the admixture of particles with additional functions. Such additional functions can, for example, be used for colouring with the use of colour pigments, and/or bringing about a change in physical characteristics. In particular these characteristics can relate to one or several of the following aspects: thermal and/or electrical conductivity, resistance to fire, (electro-) magnetic characteristics, mass, hardness, density, and many more.

The use of pigment fillings for impregnating resins in the impregnation of fibre mould-blanks has up to now posed a particular challenge for which there has not been any convincing solution up to now. This is due to the fact that up to now a successively progressing filtering-out effect of the pigments through the fibres of the fibre mould-blank has taken place. The outer layers of the fibre mould-blank became clogged up with pigments, i.e. they became blocked. This resulted in extremely inhomogeneous pigment distribution in the component and usually also in only partial impregnation of said component. Consequently, as a rule, pigment-filled impregnating resins were not used or were used only in a very limited way

In the method according to the invention the described filtering-out effect can now be prevented in that it is possible to exert higher pressures, locally and in a controlled way, on the pigment-filled impregnating resin so that its distribution in the fibres can take place faster, more comprehensively and also in a more targeted manner. This local pressure increase results although the interior pressure of the mould tool can be kept low (approximately atmospheric pressure). When the mould tool is being closed, adequate space for the fibre mould-blank still remains as a result of the free space, so that said fibre mould-blank is not compacted prior to the impregnating process. Consequently, the fibre mould-blank retains an improved permeability that makes it possible even for resin systems filled with solid materials to penetrate the fibre mould-blank. If the fibre mould-blank were to be present in a compacted form, i.e. with few interspaces between the fibres, this would result in reduced permeability. Consequently, even if very high pressures were to be applied, filtering-out of particle-shaped additional materials would take place and/or the placement of highly viscous impregnating materials would be rendered more difficult.

In contrast to this, the method according to the invention does not necessitate high pressure for injecting or sucking-in the impregnating material. The local increase in pressure results from the application of force in those locations where it is needed in order to displace the impregnating material in a targeted manner into regions of the fibre mould-blank. This, in addition, also results in an increase in the impregnating speed. In this method the locally arising pressures can be higher than the hitherto common interior pressure in liquid-impregnating-type fibre mould-blanks.

The invention thus for the first time provides a reliable option by means of which even impregnating resins comprising solid components, in particular comprising particles with a dimension larger than that of the resin molecules themselves, can be used for impregnating fibre mould-blanks.

Furthermore, the method according to the invention provides a special advantage in a fibre mould-blank that comprises fibre layers that are essentially aligned across the direction of inflow of the impregnating material, preferably unidirectional fibre layers. The same also applies to a fibre mould-blank that comprises several compressed fibre layers. In both cases it has been difficult to ensure adequate penetration of the fibre layers with impregnating material, because both a cross-alignment of fibre positions and compression of the same clearly makes it difficult for the impregnating material to be distributed. Analogous to the solution to the above-described problem of the distribution of pigment-filled impregnating resins, the method according to the invention results in clearly improved impregnating results even in these special applications.

Preferably, the locally different forces are caused by a contact-pressure movement of a movable contact-pressure device on the mould tool. Such a contact-pressure device can form part of the mould tool, but it can also be kept separate from it. Said contact-pressure device presses against the exterior surface of the mould tool, and the contact-pressure forces are transmitted, by way of the mould tool, to the impregnating material that is situated in the free space. A simple form of such a contact-pressure device consists, for example, of a doctor blade that is guided over the mould tool. Generally speaking, a movable contact-pressure device is associated with an advantage in that it is already sufficient, as a single additional means with a conventional or only slightly modified mould blank, for implementing the method according to the invention. Furthermore, in its form a contact-pressure device can be individually matched to the requirements for producing the component. For example, said contact-pressure device can comprise an irregular form by means of which with even application of force it still exerts locally different forces on the mould tool.

However, in this context it should be mentioned that locally differing forces acting on the mould tool are achieved in a movable contact-pressure device already in that the contact-pressure device does not apply contact pressure at the same time on the entire mould tool in the region of the free space, i.e. in that in those locations against which the contact-pressure device rests at a given time the force exerted is greater than it is at the adjacent locations and greater than in locations situated further away. The shape of a movable contact-pressure device is thus to be understood only as a supplementary means for local force variation.

In principle, within the context of the method of the invention it is possible to gradually close the free space, starting from any desired location. However, it is preferable if the free space is closed from one end of the fibre mould-blank to another end of the fibre mould-blank. Starting from a first end, i.e. a delimitation of the mould blank, the free space is thus closed in the direction of a second end, which is opposite the first end. In this process it is possible to work in longitudinal direction, in cross direction of the fibre mould-blank, and in diagonal direction, wherein, preferably, progressing in longitudinal direction, i.e. in the direction of extension, of the fibre mould-blank with the largest dimensions is provided for. In the case of progressing in longitudinal direction, the width of the free space is comparatively narrower, along which width said free space is gradually being closed. Working from one end to another end of the fibre mould-blank is, in particular, associated with an advantage in that the impregnating material at commencement of the process does not necessarily have to be well distributed in the entire free space, but will be distributed to all the locations only during the process (primarily automatically due to the distribution pressure caused by the effect of force).

The use of the method according to the invention is particularly advantageous in the production of a component with an extension in at least one direction of at least one metre, preferably with the use of a fast-curing impregnating material. Up to now it has not been possible at all, or possible only with a risk of incurring very considerable waste, to impregnate such large components in one piece, let along with the use of fast-curing resins. Consequently, impregnating several individual components of a component became necessary, with said individual components having had to be assembled later on. To this extent the present invention realises its great potential all the more in the production of large components which due to stringent stability requirements need to be produced in a single piece, for which components therefore up to now the production by means of fibre impregnating methods could not be considered at all. The method does provides particularly advantageous effects in the production of a rotor blade, for example of the main rotor of a helicopter. By means of said method, in one step and from one cast, a highly stable rotor blade of excellent surface quality can be produced, which rotor blade meets the most stringent requirements relating to reproducible product qualities.

A mould tool according to the invention of the type mentioned in the introduction is **characterised in that** the narrowing device is designed in such a way that during narrowing it subjects the mould tool gradually to locally different forces. The mould tool preferably comprises at least two mould parts, comprising at least one elastic mould tool that is temporarily elastically deformable by means of the locally different forces in such a way that the free space is closed as a result of the deformation. The elastic mould part thus acts as a type of medium for narrowing the free space, because it does not compensate for the forces exerted, but onwards transmits said forces. Said mould tool can, for example, comprise a top shell of a mould tool, which top shell is kept elastic in such a way that at least part of the locally variable forces exerted onto it are transmitted into the interior of the mould tool in such a way that the free space closes. Particularly preferable is an elastic mould part made of metal, for example of flexible sheet metal, or of plastic, wherein its material is preferably selected so that it is temperature-stable according to the temperatures encountered in the impregnating method.

Particularly preferably the narrowing device comprises a multitude of contact-pressure devices that exert locally different forces onto the mould tool. They can, for example, be tensioning devices that as a result of different tensioning or non-tensioning in turn cause different forces to act on the mould tool. They are preferably differently tensionable, and in this way exert the locally different forces. With the use of a plural number of contact-pressure devices it is not mandatory that they are designed so as to be movable, which among other things is associated with an advantage in that they can also be firmly connected to the mould tool. If this mould tool during the impregnating method is, for example, kept at temperature conditions that make direct human action on the tool impossible, the tensioning devices, which are preferably stationary, can also be activated and/or deactivated by remote control.

Below, the principle of the invention is explained in more detail with reference to drawings. The following are shown:
Fig. 1 a section view of a mould tool according to the state of the art;
Fig. 2 a lateral view of a mould tool according to the invention;
Fig. 3 a detailed section view of part of the mould tool of Fig. 2.

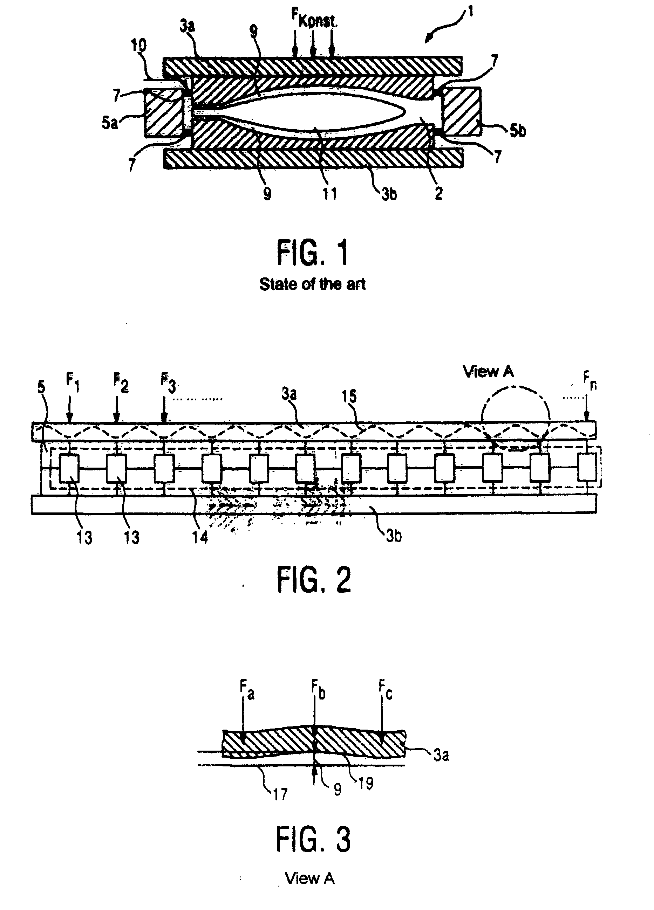

Figure 1 shows a mould tool 1 with a fibre mould-blank 11 inserted therein, which fibre mould-blank 11 comprises several fibre layers that have been wound around a compact core and that are compressed. The mould tool 1 comprises a top, first, mould part 3a and a bottom, second, form part 3b, which are designed as a top or bottom mould, and further comprises two frame parts 5a, 5b. Together they form a cavity 2, into which the fibre mould blank 11 has been inserted. At the intersecting points or intersecting lines the cavity 2 is closed by seals 7. In each case free spaces 9 in the form of narrow gaps are formed between the fibre mould-blank 11 and the interior surfaces of the two mould parts 3a, 3b. An impregnating material 10 is placed in the cavity 2 by overpressure at one inlet (not shown) and/or by negative pressure at one outlet. According to the state of the art a constant force FKonst is exerted onto the rigidly designed first mould part 3a. The impregnating material 10 is thus subjected to a pressure that distributes it in the gaps, and displaces the fibres of the fibre mould blank 11.

Figure 2 shows an exemplary embodiment of a mould tool 1 according to the invention. It also comprises two mould parts 3a, 3b as well as a frame 5, which in the embodiment shown is divided into two and is partly associated with the first mould part 3a and partly with the second mould part 3b. In contrast to the rigid design in Fig. 1, the mould parts 3a, 3b are elastic, for example comprising relatively thin metal sheets. By means of a narrowing device 14, according to the invention said mould parts 3a, 3b are locally subjected to different forces F1, F2, F3, ... Fn. This takes place in that the narrowing device 14 comprises several tensioning devices 13 that generate these locally different forces F1, F2, F3, ... Fn. As a result of the effect of the forces F1, F2, F3, ... Fn, a bending line 15 results in the first mould part 3a, and analogously (not shown) in the second mould part 3b.

The effect generated as a result of the above is shown in detail in Figure 3. The figure shows a partial section of the interior of the mould tool 1 of Figure 2. Inserted in it is a fibre mould-blank 11 whose exterior surface 17 is shown in the figure. On its inside facing the fibre mould-blank 11 the mould part 3a comprises an interior surface 19. Between this interior surface 19 and the exterior surface 17 of the fibre mould-blank 11 there is again a gap 9, which in the diagram is already filled with impregnating material 10 not shown. The forces F1, F2, F3, ... Fn exerted by the tensioning devices 13 (compare Figure 2) cause different forces Fa, Fb, Fc, which the mould part 3a transmits towards the interior. The forces Fa and Fc, which are exerted in regions near a tensioning device 13, exceed the force Fb that is exerted between such regions. Thus, towards the interior, too, different forces Fa, Fb, Fc are exerted, by means of which the free space 9 is reduced and finally completely closed.

In order to implement an impregnating method according to the invention, after a fibre mould-blank 11 has been placed into the cavity 2, the mould tool 1 is closed, impregnating material 10 is placed into the free spaces 9, and then locally differentiated compression is achieved. This takes place by gradually applying the forces F1, F2, F3, ... Fn, for example in the order stated, i.e. in the figure progressing from left to right. The free space 9 can first be closed on the side of the mould tool 1, which side is shown on the left in Figure 2, and this narrowing can gradually be continued up to the right side of the mould tool 1 until the free space 9 has been completely narrowed. As a result of the order and the shape of the force exerted, the flow or the flow front of the impregnating material 10 within the free space 9, and thus penetration of the fibre mould-blank 11 with impregnating material 10, is controlled. At the end of the method in this way a completely impregnated component is obtained, even in the numerous cases, as mentioned above, where up to now considerable problems have been encountered.

Since the above production method that has been described in detail is only one exemplary embodiment, the devices and steps necessary for this can in the usual manner by modified to a wide extent by an average person skilled in the art, without the scope of the invention being left. In particular, the concrete embodiments of the mould tool can take place in a form other than that described above. Furthermore, the use of the indefinite article "a" or "one" does not exclude the respective features or characteristics from being present in plural numbers.

### List of reference characters:

- 1: Mould tool
- 2: Cavity
- 3a, 3b: Mould parts (top mould and bottom mould)
- 5: Frame
- 5a, 5b: Frame parts
- 7: Seals
- 9: Free spaces
- 10: Impregnating material
- 11: Fibre mould-blank
- 13: Tensioning devices
- 14: Narrowing device
- 15: Bending line
- 17: Exterior surface
- 19: Interior surface
- F1, F2, F3, ... Fn, Fa, Fb, Fc: different forces
- FKonst: Constant force

## Claims

1. A method for producing a component made of fibre-reinforced plastic by impregnating a fibre mould-blank (11) with a liquid impregnating material (10), comprising at least the following steps:
a) placing the fibre mould-blank (11) into a cavity (2) of a mould tool (1) while generating a temporary free space (9) between the fibre mould-blank (11) and at least one interior surface (19) of the mould tool (1);
b) feeding the impregnating material (10) into this free space (9);
c) closing the free space (9) by narrowing the mould tool (1) so that the impregnating material (10) is displaced from the free space (9) into the fibre mould-blank (11),
**characterised in that** the mould tool (1) is gradually subjected to locally different forces F1; F2; F3; ... Fn, Fa; Fb; Fc) which locally cause the free space (9) to be closed.

2. The method according to claim 1,
**characterised in that** at the end of the method the entire interior surfaces (19) of the mould tool (1) rest against the component.

3. The method according to claim 1 or 2,
**characterised by** the use of a thermoplastic impregnating material (10).

4. The method according to claim 1 or 2,
**characterised by** the use of a duroplastic impregnating material (10).

5. The method according to claim 3 or 4,
**characterised by** the use of a pigment-filled impregnating resin.

6. The method according to any one of the preceding claims, **characterised by** a fibre mould-blank (11) that comprises fibre layers that are essentially aligned across a direction of inflow of the impregnating material, preferably unidirectional fibre layers.

7. The method according to any one of the preceding claims,
**characterised by** a fibre mould-blank (11) that comprises several compressed fibre layers.

8. The method according to any one of the preceding claims,
**characterised by** a contact-pressure movement of a movable contact-pressure device on the mould tool (1), which contact-pressure device causes different forces F1; F2; F3; ... Fn, Fa; Fb; Fc).

9. The method according to any one of the preceding claims,
**characterised in that** the free space (9) is closed in a direction from one end of the fibre mould-blank (11) to another end of the fibre mould-blank (11).

10. A mould tool (1) for producing components made of fibre-reinforced plastic by impregnating a fibre mould-blank (11) with a liquid impregnating material (10), with a cavity (2) into which the fibre mould-blank (11) can be placed by forming a temporary free space (9) between the fibre mould-blank (11) and at least one interior surface (19) of the mould tool (1), and a narrowing device (14) for narrowing the mould tool (1),
**characterised in that** the narrowing device (14) is designed in such a way that during narrowing it gradually subjects the mould tool (1) to locally different forces (F1; F2; F3; ... Fn, Fa; Fb; Fc).

11. The mould tool according to claim 10,
**characterised by** at least two mould parts (3a, 3b), comprising at least one elastic mould part (3a) that is elastically deformable by means of the locally different forces (F1; F2; F3; ... Fn, Fa, Fb) in such a way that the free space (9) is closed as a result of the deformation.

12. The mould tool according to claim 11,
**characterised by** an elastic mould part (3a) of metal or plastic.

13. The mould tool according to any one of claims 10 to 12,
**characterised in that** the narrowing device comprises a multitude of contact-pressure devices (13).

14. The mould tool according to claim 13,
**characterised in that** the contact-pressure devices (13) are differently tensionable in order to exert the locally different forces.
